# EUROPÄISCHE PATENTSCHRIFT

(11) **EP 2 029 319 B1**
(45) Veröffentlichungstag und Bekanntmachung des Hinweises auf die Patenterteilung: **07.10.2009**
(21) Anmeldenummer: 06754035.1
(22) Anmeldetag: 01.06.2006
(51) Int. Cl.: B23Q 11/00

(54) **VERFAHREN ZUM REINIGEN VON ZUMINDEST EINEM AUFLAGEELEMENT EINER WERKSTÜCKAUFLAGE FÜR EINE BEARBEITUNGSMASCHINE**
METHOD FOR CLEANING AT LEAST ONE SUPPORT ELEMENT ON A WORKPIECE SUPPORT OF A MACHINE TOOL
PROCÉDÉ POUR NETTOYER AU MOINS UN ÉLÉMENT D'APPUI DE PORTE-PIÈCE DE MACHINE D'USINAGE

(43) Veröffentlichungstag der Anmeldung: 04.03.2009
(73) Patentinhaber: TRUMPF Werkzeugmaschinen GmbH + Co. KG, 71254 Ditzingen (DE)
(72) Erfinder: VON BORSTEL, Michael, 74385 Pleidelsheim (DE)
(74) Vertreter: Maser, Jochen
(86) Internationale Anmeldenummer: PCT/EP2006/005225
(87) Internationale Veröffentlichungsnummer: WO 2007/137613

(56) Entgegenhaltungen:
- WO-A-03/028940
- WO-A-20/04043638
- DE-A1-102004 008 300

## Beschreibung

Die Erfindung betrifft ein Verfahren zum Reinigen von zumindest einem Auflageelement einer Werkstückauflage für eine Bearbeitungsmaschine zum thermischen Schneiden von Werkstücken, insbesondere einer Laserbearbeitungsmaschine.

Zur Bearbeitung von insbesondere tafelförmigen Werkstücken in Bearbeitungsanlagen wie Laserbearbeitungsanlagen ist eine Werkstückauflage vorgesehen, die einen Rahmen mit mehreren, vorzugsweise parallel zueinander angeordneten Auflageelementen aufweist, auf denen das zu bearbeitende Werkstück aufliegt. Die Auflageelemente weisen zumeist in regelmäßigen Abständen Tragpunktspitzen auf und bilden ein Auflagefeld für das oder die Werkstücke.

Solche Laserbearbeitungsanlagen umfassen einen relativ zur Werkstückauflage bewegbaren Schneidkopf, um mit einem Laserstrahl ein weitgehend ruhendes Werkstück, das auf den Tragpunktspitzen der Auflageelemente aufliegt, zu bearbeiten. Während dem Bearbeiten kann es durch die Schneidarbeit zu Aufschweißungen an den Tragpunktspitzen kommen. Des Weiteren lagern sich Reaktionsprodukte des Schneidprozesses als auch aus dem Schneidspalt ausgetriebenes Material des Werkstückes an den Auflageelementen an. Diese Verunreinigungen der Auflageelemente werden nachfolgend mit Ablagerungen bezeichnet, wobei auch nur eine einzige Ablagerung darunter verstanden werden kann.

Zur Herstellung von Werkstücken mit gleichbleibender Qualität ist erforderlich, dass die Ablagerunen von den Auflageelementen in regelmäßigen Abständen entfernt wird oder die Auflageelemente ausgetauscht werden, um ungleichmäßige Schnitte zwischen dem Gut- und Restteil zu vermeiden.

Das Austauschen der Auflageelemente einer Werkstückauflage ist sehr kostenintensiv. Um die Lebensdauer der Auflageelemente zu verlängern wird durch die WO 2004/043638 A1 eine Reinigungsvorrichtung vorgeschlagen, durch welche die Ablagerungen mechanisch von den Auflageelementen abgetrennt werden. Solche mechanischen Vorrichtungen weisen den Nachteil auf, dass deren Reinigungswerkzeuge aufgrund eines mechanischen Abtragens stumpf werden. Das Erneuern der Reinigungswerkzeuge ist zeit- und kostenintensiv. Darüber hinaus können nur die Seitenflächen der Auflageelemente bearbeitet werden.

Der Erfindung liegt deshalb die Aufgaben zugrunde, ein Verfahren zum Reinigen von zumindest einem Auflageelement einer Werkstückauflage für eine Bearbeitungsmaschine zum thermischen Schneiden von Werkstücken, insbesondere einer Laserbearbeitungsmaschine, vorzuschlagen, welche die Lebensdauer solcher Auflageelemente in kostengünstiger Weise verlängert.

Diese Aufgabe wird erfindungsgemäß durch die Merkmale des Anspruchs 1 gelöst.

Durch das erfindungsgemäße Verfahren wird ermöglicht, dass die Bearbeitungsmaschine ohne zusätzliche Hilfsmittel einen Schneid-Reinigungslauf durchführt und dabei die mit Ablagerungen belegten Auflageelemente freischneidet. Dabei wird ein Schneidstrahl von einem Schneidkopf der Bearbeitungsmaschine derart geführt, dass die ursprüngliche Kontur der Auflageelemente erhalten bleibt und die Verschmutzungen entfernt werden. Solche Schneid-Reinigungsläufe können routinemäßig nach einer vorbestimmten Betriebsdauer der Bearbeitungsmaschine oder auf Anforderungen eines Maschinenbedieners durchgeführt werden.

Zur Durchführung der Reinigung ist gemäß einer vorteilhaften Ausgestaltung des Verfahrens vorgesehen, dass der Schneidkopf oberhalb eines Auflageelementes und entlang einer in Längsrichtung sich erstreckenden Seitenfläche, sowie außerhalb einer Stirnfläche des Auflageelementes verfahren wird und der Schneidstrahl in einer ersten Fokusebene einjustiert wird, die unterhalb einer Fokusebene für den Schneidprozess eines auf der Werkstückauflage aufliegenden Werkstückes liegt. Durch diese Ausrichtung des Schneidkopfes zum Auflageelement wird ermöglicht, dass die seitliche an den Seitenflächen anhaftenden Ablagerungen entfernt werden und die ursprünglichen Körperkanten der Auflageelemente, insbesondere die der Tragpunktspitzen wieder freigeschnitten werden. Durch die Veränderung der Fokusebene kann ein gezieltes Reinigen beziehungsweise Freischneiden von Ablagerungen an den Seitenflächen der Auflageelemente in unterschiedlicher Höhe, sowohl im Bereich der Tragpunktspitzen als auch im Bereich der dazwischenliegenden Stegabschnitte ermöglicht werden.

Nach einer weiteren vorteilhaften Ausgestaltung des Verfahrens ist vorgesehen, dass der Schneidstrahl an eine zum Werkstück weisende Stirnfläche des Auflageelementes angrenzt und in Längsrichtung des Auflageelementes verfahren wird und die Übergangskontur zwischen der Stirnfläche und den Seitenflächen des Auflageelementes mit dem Schneidstrahl nachgefahren wird. Dadurch kann die Übergangskontur zwischen Stirnfläche und Seitenfläche des Auflageelementes gezielt bearbeitet werden.

Zur Bearbeitung der Seitenflächen ist gemäß einer bevorzugten Ausführungsform des Verfahrens vorgesehen, dass der Schneidstrahl mehrmals zumindest abschnittsweise entlang einer Seitenfläche des Auflageelementes verfahren wird und mit jeder Verfahrstrecke der Abstand des Schneidstrahles zur Seitenfläche des Auflageelementes verringert wird. Dadurch kann ein systematisches Abtragen von Ablagerungen erfolgen, wobei eine schrittweise Annäherung des Schneidstrahles zur Reinigung der Auflageelemente an deren Seitenfläche der Spurbreite des Schneidstrahles entspricht oder eine Überlappung der Spurbreiten vorgesehen ist.

Eine weitere vorteilhafte Ausgestaltung des Verfahrens sieht vor, dass der Schneidstrahl mehrmals zumindest abschnittsweise entlang einer Seitenfläche des Auflageelementes verfahren wird und mit jeder Verfahrstrecke die Lage der Fokusebene des Schneidstrahles verändert wird. Die Veränderung der Fokusebene folgt von der Tragpunktspitze aus schrittweise nach unten zur Auflageebene der Auflageelemente im Rahmen der Werktstückaufnahme. Dadurch können schrittweise die Ablagerungen, die im Bereich der Tragpunktspitzen am größten sind, abgetragen werden. Die Annäherung des Schneidstrahles mit jeder Verfahrstrecke zur Seitenfläche der Auflageelemente als auch die Veränderung der Fokusebene von den Tragpunktspitzen zur Unterseite oder Auflageebene der Auflageelemente kann wahlweise miteinander kombiniert werden.

Des Weiteren ist bevorzugt vorgesehen, dass auf einer Stirnfläche des Auflageelementes anhaftende Ablagerungen mit einem Schneidstrahl freigeschnitten wird, dessen Fokusebene oberhalb der Stirnfläche des Auflageelementes liegt, so dass beim Überfahren der Stirnfläche der Auflageelemente eine Beschädigung der Tragpunktspitzen vermieden wird und eine Reinigung jeder Funktionsfläche an dem Auflageelement ermöglicht ist.

Zur schnellen Durchführung eines Schneid-Reinigungslaufes ist bevorzugt vorgesehen, dass vor dem Start des Schneid-Reinigungslaufs zur Bearbeitung der Ablagerungen durch den vom Schneidkopf geführten Schneidstrahl die Auflageelemente mit einem Sensor abgescannt werden, um das Vorhandensein von Ablagerungen zu erfassen. Dadurch kann eine Verfahrstrecke des Schneid-Reinigungslaufs auf die erfassten Ablagerungen angepasst werden, so dass spezifisch nur die Bereiche einem Schneid-Reinigungslauf unterzogen werden, welche tatsächlich Verunreinigungen aufweisen. Hierbei kann es sich auch um solche Verunreinigungen handeln, die erst ab einem gewissen Ausmaß oder Umfang als Verunreinigungen erkannt werden und durch einen Schneid-Reinigungsverlauf freizuschneiden sind.

Während dem Abscannen des zumindest einen Auflageelementes mit einem Sensor wird bevorzugt ein Abstand des Schneidkopfes zu den Ablagerungen erfasst. Hierfür ist insbesondere ein optischer Sensor vorgesehen, wie beispielsweise ein Einstechsensor oder ein Reflexsensor.

Zur Durchführung der Reinigung ist gemäß einer bevorzugten Ausgestaltung des Verfahrens eine Verfahrstrategie vorgesehen, bei der der Schneidstrahl zumindest einmal in eine Verfahrrichtung zumindest abschnittsweise entlang einer ersten Seitenfläche des Auflageelementes geführt wird und anschließend in entgegengesetzter Richtung entlang derselben oder einer gegenüberliegenden Seitenfläche desselben Auflageelementes zumindest abschnittsweise geführt wird. Dadurch kann ein Auflageelement vollständig und zeitoptimiert gereinigt werden bevor das benachbarte Auflageelement in Bearbeitung genommen wird.

Eine alternative Strategie für einen Schneid-Reinigungslauf der Auflageelemente sieht vor, dass der Schneidstrahl zumindest einmal in eine Verfahrrichtung zumindest abschnittsweise entlang einer ersten Seitenfläche des Auflageelementes geführt und anschließend in entgegengesetzter Verfahrrichtung entlang einer Seitenfläche eines benachbarten Auflageelementes zumindest abschnittsweise geführt wird. Dadurch kann zusätzlich erzielt werden, dass die Freiräume zwischen zwei benachbarten Auflageelementen gereinigt werden, bevor der weitere benachbarte Zwischenraum gereinigt wird.

Beim Reinigungsverfahren wird bevorzugt als Schneidgas Druckluft eingesetzt. Dadurch ist eine kostengünstige Ausgestaltung eines Schneid-Reinigungslaufs ermöglicht.

Die Erfindung sowie weitere vorteilhafte Ausführungsformen und Weiterbildungen derselben werden im Folgenden anhand der in den Zeichnungen dargestellten Beispiele näher beschrieben und erläutert. Die der Beschreibung und den Zeichnungen zu entnehmenden Merkmale können einzeln für sich oder zu mehreren in beliebiger Kombination erfindungsgemäß angewandt werden. Es zeigen:
- Figur 1: eine schematische Ansicht auf eine Werkstückaufla- ge mit Gut- und Restteilen,
- Figur 2: eine schematische Schnittdarstellung entlang der Li- nie II- II in Figur 1,
- Figur 3: eine perspektivische Darstellung eines verschmutz- ten Auflageelementes,
- Figur 4: eine schematische Stirnseitenansicht eines Auflage- elementes mit seitlichen Ablagerungen,
- Figur 5: eine schematische Seitenansicht eines Auflageele- mentes mit einer auf einer Stirnfläche sich befinden- den Ablagerung und
- Figur 6: eine perspektivische Darstellung eines alternativen Auflageelementes mit Ablagerungen.

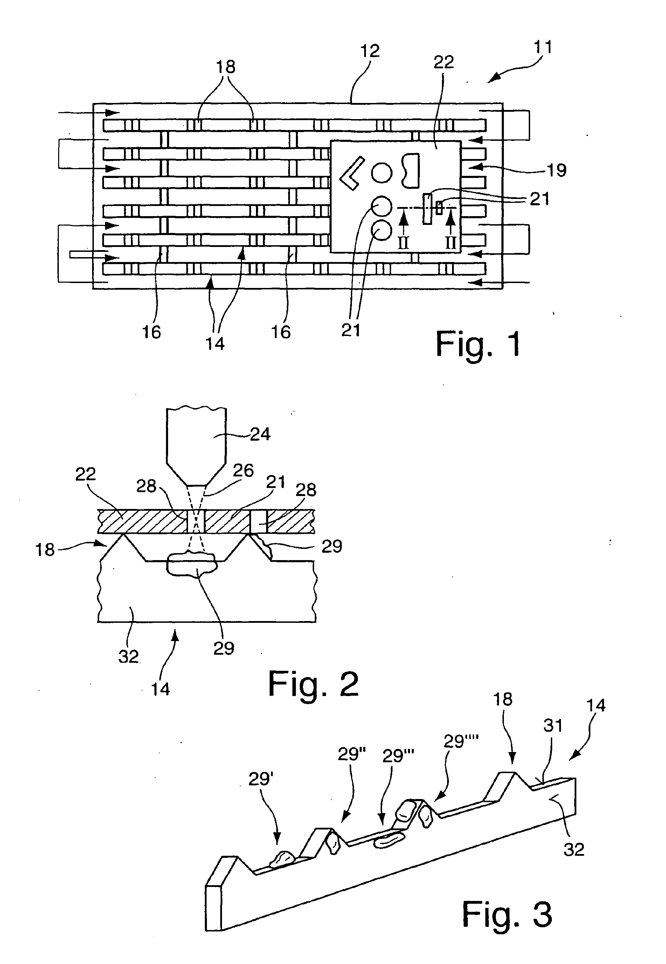

In Figur 1 ist eine schematische Ansicht von oben auf eine Werkstückauflage 11 einer nicht.näher dargestellten Bearbeitungsmaschine, insbesondere Laserbearbeitungsmaschine dargestellt. Diese Werkstückauflage 11 umfasst einen Rahmen 12, der zur Aufnahme von einer Vielzahl von insbesondere parallel zueinander ausgerichteten Auflageelemente 14 vorgesehen ist. Die Auflageelemente 14 werden von rechtwinklig zu den Auflageelementen 14 angeordneten Trägerelementen 16 getragen. Diese Auflageelemente 14 sind auswechselbar von den Trägerelementen 16 gehalten. Die Auflageelemente 14 umfassen in regelmäßigen Abständen Tragpunktspitzen 18, die ein Auflagefeld für eine Werkstücktafel 19 bilden. Diese Werkstücktafel 19 wurde gemäß Figur 1 bereits einer Bearbeitung unterzogen, wobei mittels eines Schneidstrahles aus der Werkstücktafel 19 Gutteile 21 herausgeschnitten wurden, wobei gemäß dem Ausführungsbeispiel ein Restteil 22 verbleibt.

Eine solche Bearbeitung ist in einer Seitenansicht gemäß Figur 2 näher dargestellt. Über einen nur teilweise dargestellten Schneidkopf 24 wird ein Schneidstrahl 26 von oben auf die Werkstücktafel 19 gerichtet, so dass ein Schneidspalt 28 erzeugt wird, der das Gutteil 21 von dem Restteil 22 trennt. Gleichzeitig tritt während der Schneidstrahlbearbeitung auf der Unterseite des Werkstückes 19 der Schneidstrahl 26 aus und trifft beim Überfahren der Auflageelemente 14 teilweise auf diese auf. Die nach unten austretende noch heiße Schlacke haftet an den Auflageelementen 14 an und bildet Ablagerungen 29 an einer Stirnfläche 31 und einer Seitenfläche 32 am Auflageelement 14.

Benachbart zu dem sich in der Bearbeitung befindende Schneidspalt 28 ist beispielsweise zuvor ein weiterer Schneidspalt 28 in die Werkstücktafel 19 eingebracht worden, wobei dieser Schneidspalt 28 eine Tragpunktspitze 18 überquert. In einem solchen Bearbeitungsfall können sich Ablagerungen 29 an der Stirnfläche 31 entlang der Tragpunktspitze 18 ablagern.

In Figur 3 ist perspektivisch ein Auflageelement 14 angeordnet, welches verschiedene Beispiele für Ablagerungen 29 am Auflageelement 14 darstellt. Eine Ablagerung 29' ist beispielhaft ausschließlich auf der Stirnfläche 31 des Auflageelementes 14. Eine Ablagerung 29" ist an einer Seitenfläche 32 im Bereich der Tragpunktspitze 18. Eine weitere Ablagerung 29'" befindet sich zwischen zwei Tragpunktspitzen 18 an der Seitenfläche 32 des Auflageelementes 14 und eine weitere Ablagerung 29"" ist sowohl an einer Stirnfläche 31 und einer Seitenfläche 32 der Tragpunktspitze 18. Bei einer längeren Bearbeitungsdauer von mehreren Werkstücktafeln 19 sind zumeist keine einzelnen Ablagerungen 29 an den Auflageelementen 14, sondern die Stirn- und Seitenflächen 31, 32 nahezu vollständig mit Ablagerungen 29 überdeckt.

Zur Reinigung von mit Ablagerungen 29 verschmutzen Auflagestegen 14 ist ein Schneid-Reinigungslauf vorgesehen, bei welchem der Schneidstrahl 26 der Bearbeitungsmaschine für die Verlängerung der Lebensdauer der Auflageelemente 14 eingesetzt wird. Bei diesem Schneid-Reinigungslauf schneidet die Bearbeitungsmaschine die mit Ablagerungen 29 versehenen Auflageelemente 14 selbst wieder frei.

Vor Beginn eines Schneid-Reinigungslaufes werden das oder die Auflageelemente 14 abgescannt, um beispielsweise die einzelnen Ablagerungen 29' bis 29"" zu erfassen, so dass der Schneid-Reinigungslauf nur spezifisch für die verschmutzen Bereiche vorgesehen wird. Während dem Abscannen der Auflageelemente 14 wird gleichzeitig ein Abstand zwischen dem Sensor und den Ablagerungen 29 erfasst. Dadurch kann gleichzeitig mit der Schneid-Reinigungsstrategie eine Fokusebene des Schneidstrahles 26 eingestellt werden, um eine hohe Reinigungswirkung zu erzielen und gleichzeitig die ursprüngliche Kontur der Auflageelemente 14 zu erhalten.

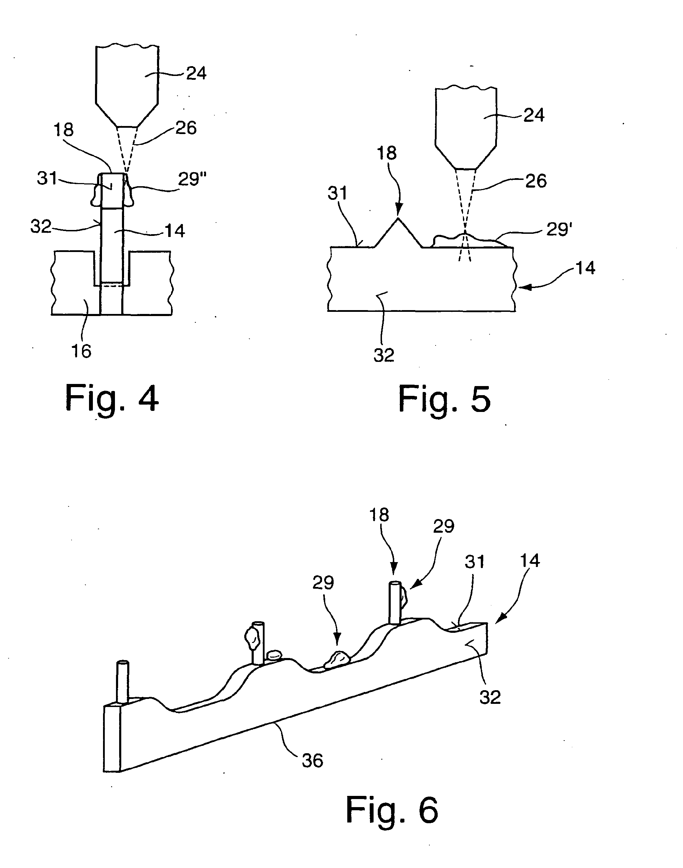

Bei der in Figur 4 dargestellten Ablagerung 29'" wird beispielsweise eine Reinigungsstrategie gewählt, bei der zunächst der höchste Punkt der Ablagerung 29"' durch eine Verfahrstrecke des Schneidstrahles 26 parallel zur Längserstreckung des Auflageelementes 14 abgetragen wird. Sobald eine gegenüber der Tragpunktspitze 18 vertiefte Ebene erreicht wird, kann zusätzlich die Ablagerung 29'" von außen schrittweise zur Seitenfläche 32 hin abgetragen werden, um nach dem Schneid- Reinigungslauf eine plane Seitenfläche 32 zu erhalten.

In Figur 5 ist eine Reinigungsstrategie dargestellt, bei der die Ablagerung 29' auf der Stirnfläche 31 der Auflageelemente 14 entfernt wird. Beispielsweise wird der Schneidstrahl 26 mit einer Fokusebene eingestellt, die oberhalb der Stirnfläche 31 liegt. Der Schneidstrahl 26 wird zwischen zwei benachbarten Tragpunktspitzen 18 hin und her verfahren, wobei mit jedem Verfahrweg eine zusätzliche Absenkung der Fokusebene auf die Stirnfläche 31 des Auflageelementes 14 vorgesehen ist.

Sobald die Stirnflächen 31 und Seitenflächen 32 des Auflageelementes 14 abgearbeitet wurden, kann ein weiterer Reinigungsschritt vorgenommen werden, bei dem die gemeinsame Körperkante der Stirnfläche 31 und Seitenfläche 32 abgefahren wird. Ebenso kann zusätzlich das Dach beziehungsweise die Tragpunktspitze 18 selbst durch ein oberhalb der Körperkante beziehungsweise der Spitze liegenden Fokusebene bearbeitet werden.

In Figur 6 ist eine alternative Ausführungsform eines Auflageelementes 14 zu Figur 3 dargestellt. Dieses Auflageelement 14 ist zweiteilig ausgebildet, wobei ein Grundkörper 36 zumeist aus einem Stahl hergestellt ist und die Tragpunktspitzen 18, die als dünne Stangen, Rohre oder Stäbe senkrecht nach oben stehen, zumeist aus einem besonders beständigen Material wie Wolfram, Molybdän, Titan, Keramik oder dergleichen hergestellt sind. Solche Geometrien der Auflageelemente 14 können durch die Veränderung der Fokuslage und durch Entlangfahren der Kontur der Auflageelemente 14 beziehungsweise deren Tragpunktspitzen 18 von Ablagerungen 29 beseitigt werden.

Zum Reinigen der Auflageelemente 14 einer Werkstückauflage 11 kann gemäß einer weiteren Strategie eines Schneid-Reinigungslaufs vorgesehen sein, dass der Schneidkopf 24 zeilenförmig entlang jedem Auflageelement 14 verfahren wird, wie dies in Figur 1 beispielhaft durch die Pfeile der oberen beiden Auflageelemente 14 dargestellt ist. Dabei kann sowohl die Seitenfläche 32 als auch die Stirnfläche 31 beim zeilenmäßigen Abfahren mitumfasst sein. Alternativ kann auch vorgesehen sein, dass nicht die gesamte Länge der Auflageelemente 14 in einer Richtung und anschließend in die andere Richtung durch ein Verfahren des Schneidkopfes 24 bearbeitet wird, sondern dass die Auflageelemente 14 in zwei oder mehrere Sektionen unterteilt werden und nacheinander alle Sektionen einer Seitenfläche 32 des Auflageelementes 14 abgearbeitet werden, bevor zur benachbarten Seitenfläche 32 des Auflageelementes 14 verfahren und anschließend zum benachbarten Auflageelement 14 verfahren wird.

In Figur 1 ist gemäß den Pfeilen der unteren zwei Auflageelemente 14 eine alternative Verfahrstrategie für den Schneid-Reinigungslauf dargestellt. Eine solche in sich geschachtelte Verfahrstrategie ermöglicht ebenfalls ein aufeinanderfolgendes Abarbeiten von zwei oder mehreren zueinander benachbarten Auflageelemente 14, wobei ebenfalls eine sektionsweise Bearbeitung integriert sein kann.

## Patentansprüche

1. Verfahren zum Reinigen von zumindest einem Auflageelement (14) einer Werkstückauflage (11) für eine Bearbeitungsmaschine zum thermischen Schneiden von Werkstücken, insbesondere einer Laserbearbeitungsmaschine,
- bei dem das zumindest eine von Gut- und Restteilen (21, 22) befreite Auflageelement (14) abgescannt wird,
- bei dem ein Schneid-Reinigungslauf durchgeführt wird und das zumindest eine Auflageelement (14) von zumindest einer daran anhaftender Ablagerung (29) mit einem von einem Schneidkopf (24) geführten Schneidstrahl (26) freigeschnitten wird.

2. Verfahren nach Anspruch 1, **dadurch gekennzeichnet, dass** der Schneidkopf (24) oberhalb eines Auflageelementes (14) und entlang einer in Längsrichtung sich erstreckenden Seitenfläche (32) sowie außerhalb einer Stirnfläche (31) des Auflageelementes (14) verfahren wird und der Schneidstrahl (26) in einer ersten Fokusebene einjustiert wird, die unterhalb einer Fokusebene für den Schneidprozess eines auf der Werkstückauflage (11) aufliegenden Werkstückes (19) liegt.

3. Verfahren nach Anspruch 1 oder 2, **dadurch gekennzeichnet, dass** der Schneidstrahl (26) an eine zum Werkstück (19) weisende Stirnfläche (31) des Auflageelementes angrenzend in Längsrichtung des Auflageelementes (14) verfahren wird und die Übergangskontur zwischen der Stirnfläche (31) und der Seitenflächen (32) des Auflageelementes mit dem Schneidstrahl (26) nachgefahren wird, bei dem die Fokusebene oberhalb der Übergangskontur liegt.

4. Verfahren nach einem der vorhergehenden Ansprüche, **dadurch gekennzeichnet, dass** der Schneidstrahl (26) mehrmals zumindest abschnittsweise entlang einer Seitenfläche (32) des Auflageelementes (14) verfahren wird und mit jeder Verfahrstrecke der Abstand des Schneidstrahles (26) zur Seitenfläche (32) des Auflageelementes (14) verringert wird.

5. Verfahren nach einem der vorhergehenden Ansprüche, **dadurch gekennzeichnet, dass** der Schneidstrahl (26) mehrmals zumindest abschnittsweise entlang einer Seitenfläche (32) des Auflageelementes (14) verfahren wird und mit jeder Verfahrstrecke die Lage der Fokusebene des Schneidstrahls (26) verändert wird, insbesondere von einer Stirnfläche (31) des Auflageelementes (14) beginnend schrittweise abgesenkt wird.

6. Verfahren nach einem der vorhergehenden Ansprüche, **dadurch gekennzeichnet, dass** die zumindest eine auf einer Stirnfläche (31) des Auflageelementes (14) anhaftende Ablagerung (29) mit einem Schneidstrahl (26) freigeschnitten wird, dessen Fokusebene oberhalb der Stirnfläche (31) des Auflageelementes (14) liegt.

7. Verfahren nach einem der vorhergehenden Ansprüche, **dadurch gekennzeichnet, dass** beim Abscannen des zumindest einen Auflageelementes (14) mit einem Sensor das Vorhandensein von zumindest einer Ablagerung (29) erfasst wird.

8. Verfahren nach Anspruch 7, **dadurch gekennzeichnet, dass** beim Abscannen des zumindest einen Auflageelementes (14) ein Abstand zur zumindest einen Ablagerung (29) mit dem Sensor erfasst wird.

9. Verfahren nach einem der vorhergehenden Ansprüche, **dadurch gekennzeichnet, dass** der Schneidstrahl (26) zumindest ein Mal in eine Verfahrrichtung zumindest abschnittsweise entlang einer ersten Seitenfläche (32) des Auflageelementes (14) geführt und anschließend in entgegengesetzter Verfahrrichtung entlang derselben oder einer gegenüberliegenden Seitenfläche (32) desselben Auflageelementes (14) zumindest abschnittsweise geführt wird.

10. Verfahren nach einem der Ansprüche 1 bis 8, **dadurch gekennzeichnet, dass** der Schneidstrahl (26) zumindest ein Mal in eine Verfahrrichtung zumindest abschnittsweise entlang einer ersten Seitenfläche (32) des Auflageelementes (14) geführt und anschließend in entgegengesetzter Verfahrrichtung entlang einer Seitenfläche (32) eines benachbarten Auflageelementes (14) zumindest abschnittsweise geführt wird.

11. Verfahren nach einem der vorhergehenden Ansprüche, **dadurch gekennzeichnet, dass** zum Reinigen der Auflageelemente (14) mit einem Schneidstrahl (26) als Schneidgas Druckluft eingesetzt wird.

## Claims

1. A method for cleaning at least one support element (14) of a workpiece support (11) for a machine tool for the thermal cutting of workpieces, in particular of a laser machine tool,
- in which the at least one support element (14), cleared of article pieces and residual pieces (21, 22), is scanned,
- in which a cutting-cleaning operation is performed and the at least one support element (14) is cleared of at least one deposit (29) adhering thereto by cutting by means of a cutting beam (26) guided by a cutting head (24).

2. The method as claimed in claim 1, **characterized in that** the cutting head (24) is moved above a support element (14) and along a lateral face (32) expending in the longitudinal direction, as well as outside of a front face (31) of the support element (14), and the cutting beam (26) is adjusted-in in a first focal plane, which is beneath a focal plane for the process of cutting a workpiece (19) supported on the workpiece support (11).

3. The method as claimed in claim 1 or 2, **characterized in that** the cutting beam (26), adjoining a front face (31) of the support element that faces towards the workpiece (19), is moved in the longitudinal direction of the support element (14), and the transition contour between the front face (31) and the lateral faces (32) of the support element is traced by means of the cutting beam (26), with the focal plane being located above the transition contour.

4. The method as claimed in any one of the preceding claims, **characterized in that** the cutting beam (26) is moved several times, at least portionally, along a literal face (32) of the support element (14) , and the distance of the cutting beam (26) from the lateral face (32) of the support element (14) is reduced with each travel course.

5. The method as claimed in any one of the preceding claims, **characterized in that** the cutting beam (26) is moved several times, at least portionally, along a lateral face (32) of the support element (14), and the position of the focal plane of the cutting beam (26) is varied with each travel course, in particular is lowered in a stepwise manner, starting from a front face (31) of the support element (14).

6. The method as claimed in any one of the preceding claims, **characterized in that** the at least one deposit (29) adhering to a front face (31) of the support element (14) is cleared by cutting by means of a cutting beam (26), the focal plane of which is located above the front face (31) of the support element (14).

7. The method as claimed in any one of the preceding claims, **characterized in that** the presence of at least one deposit (29) is sensed by means of a sensor during the scanning of the at least one support element (14).

8. The method as claimed in claim 7, **characterized in that** a distance from the at least one deposit (29) is sensed by means of the sensor during the scanning of the at least one support element (14).

9. The method as claimed in any one of the preceding claims, **characterized in that** the cutting beam (26) is guided at least once in one travel direction, at least portionally, along a first lateral face (32) of the support element (14), and is then guided, at least portionally, in the opposite travel direction along the same or an opposite lateral face (32) of the same support element (14).

10. The method as claimed in any one of claims 1 to 8, **characterized in that** the cutting beam (26) is guided at least once in one travel direction, at least portionally, along a first lateral face (32) of the support element (14), and is then guided, at least portionally, in the opposite travel direction along a lateral face (32) of an adjacent support element (14).

11. The method as claimed in any one of the preceding claims, **characterized in that** the cutting gas used for cleaning the support elements (14) by means of a cutting beam (26) is compressed air.

## Revendications

1. Procédé permettant de nettoyer au moins un élément d'appui (14) d'un porte-pièce (11) pour une machine d'usinage destinée au coupage thermique de pièces, notamment pour une machine d'usinage au laser,
- lors duquel l'élément d'appui (14) - au moins au nombre de un - débarrassé de pièces usinées et d'éléments résiduels (21, 22) est scanné,
- lors duquel un cycle de nettoyage par coupage est réalisé et l'élément d'appui (14) - au moins au nombre de un - est libéré par coupage d'au moins un dépôt (29) qui y adhère au moyen d'un jet de coupe (26) guidé par une tête de coupe (24) .

2. Procédé selon la revendication 1, **caractérisé en ce que** la tête de coupe (24) est déplacée au-dessus d'un élément d'appui (14) et le long d'une face latérale (32) s'étendant en sens longitudinal ainsi qu'en dehors d'une face frontale (31) de l'élément d'appui (14), et **en ce que** le jet de coupe (26) est ajusté selon un premier plan focal qui est situé au-dessous d'un plan focal pour le processus de coupe d'une pièce usiner (19) reposant sur le porte-pièce (11).

3. Procédé selon la revendication 1 ou 2, **caractérisé en ce que** le jet de coupe (26) est déplacé de manière contiguë à une face frontale (31) de l'élément d'appui (14) orientée vers la pièce à usiner (19) dans le sens longitudinal de l'élément d'appui (14), et **en ce que** le contour de transition entre la face frontale (31) et la face latérale (32) de l'élément d'appui est retracé avec le jet de coupe (26) dont le plan focal se situe au-dessus du contour de transition.

4. Procédé selon l'une des revendications précédentes, **caractérisé en ce que** le jet de coupe (26) est déplacé plusieurs fois, du moins par segments, le long d'une face latérale (32) de l'élément d'appui (14) et **en ce que**, à chaque passage, la distance du jet de coupe (26) par rapport à la face latérale (32) de l'élément d'appui (14) est réduite.

5. Procédé selon l'une des revendications précédentes, **caractérisé en ce que** le jet de coupe (26) est déplacé plusieurs fois, du moins par segments, le long d'une face latérale (32) de l'élément d'appui (14) et **en ce que**, à chaque passage, la position du plan focal du jet de coupe (26) est modifiée, notamment abaissée progressivement en commençant par une face frontale (31) de l'élément d'appui (14).

6. Procédé selon l'une des revendications précédentes, **caractérisé en ce que** le dépôt (29) - au moins au nombre de un - adhérant sur une face frontale (31) de l'élément d'appui (14) est éliminé par coupage au moyen d'un jet de coupe (26) dont le plan focal est situé au-dessus de la face frontale (31) de l'élément d'appui (14).

7. Procédé selon l'une des revendications précédentes, **caractérisé en ce que** lors du scannage de l'élément d'appui (14) - au moins au nombre de un -, la présence d'au moins un dépôt (29) est saisie à l'aide d'un capteur.

8. Procédé selon la revendication 7, **caractérisé en ce que**, lors du scannage de l'élément d'appui (14) - au moins au nombre de un -, une distance par rapport au dépôt (29) - au moins au nombre de un - est saisie à l'aide du capteur.

9. Procédé selon l'une des revendications précédentes, **caractérisé en ce que** le jet de coupe (26) est déplacé au moins une fois dans un sens de déplacement donné, au moins par segments, le long d'une première face latérale (32) de l'élément d'appui (14) et est ensuite déplacé, au moins par segments, dans le sens de déplacement inverse le long de la même face latérale ou d'une face latérale opposée (32) du même élément d'appui (14).

10. Procédé selon l'une des revendications 1 à 8, **caractérisé en ce que** le jet de coupe (26) est déplacé au moins une fois dans un sens de déplacement donné, au moins par segments, le long d'une première face latérale (32) de l'élément d'appui (14), et est ensuite déplacé, au moins par segments, dans le sens de déplacement inverse le long d'une face latérale (32) d'un élément d'appui (14) voisin.

11. Procédé selon l'une des revendications précédentes, **caractérisé en ce que** le gaz de coupe utilisé pour nettoyer les éléments d'appui (14) au moyen d'un jet de coupe (26) est de l'air comprimé.
